# EUROPÄISCHE PATENTSCHRIFT

(11) **EP 2 616 234 B1**
(45) Veröffentlichungstag und Bekanntmachung des Hinweises auf die Patenterteilung: **05.04.2017**
(21) Anmeldenummer: 11767622.1
(22) Anmeldetag: 12.09.2011
(51) Int. Cl.: B29C 70/50, B29B 15/10

(54) **DIREKT-SMC-PRODUKTIONSVORRICHTUNG UND VERFAHREN**
DIRECT SMC PRODUCTION DEVICE AND METHOD OF FABRICATION
DISPOSITIF ET MÉTHODE DE PRODUCTION DIRECTE DE SMC

(30) Priorität: 17.09.2010 DE 102010045889
(43) Veröffentlichungstag der Anmeldung: 24.07.2013
(73) Patentinhaber: Schmidt & Heinzmann GmbH & Co. KG, 76646 Bruchsal (DE)
(72) Erfinder: FEIL, Matthias, 88214 Ravensburg (DE)
(74) Vertreter: Daub, Thomas
(86) Internationale Anmeldenummer: PCT/EP2011/004576
(87) Internationale Veröffentlichungsnummer: WO 2012/034676

(56) Entgegenhaltungen:
- EP-A2- 0 392 143
- WO-A1-92/20521
- DE-A1- 10 151 761
- DE-C1- 3 540 389
- FR-A1- 2 276 153
- US-A- 3 586 573
- US-A- 4 238 176
- US-A- 5 874 152
- US-B1- 6 514 370

## Beschreibung

### Stand der Technik

Es sind bereits Direkt-SMC-Produktionsvorrichtungen mit einer Imprägniervorrichtung bekannt, beispielsweise aus der US 4,238,176. Entlang einer Materialstrangtransportrichtung ist nach der Imprägniervorrichtung eine Mikrowelleneinheit angeordnet, die dazu vorgesehen ist, eine so genannte Reifung einer Harzmatte zu beeinflussen.

### Vorteile der Erfindung

Die Erfindung geht aus von einer Direkt-SMC-Produktionsvorrichtung gemäß Anspruch 1 mit einer Imprägniervorrichtung zur Imprägnierung von Fasern eines Materialstrangs.

Es wird vorgeschlagen, dass die Direkt-SMC-Produktionsvorrichtung eine Kühlvorrichtung zumindest zur Kühlung des Materialstrangs aufweist, die entlang einer Materialstrangtransportrichtung nach der Imprägniervorrichtung angeordnet ist. Unter einer "Direkt-SMC-Produktionsvorrichtung" soll hier insbesondere eine Vorrichtung zur Produktion von faserverstärkten duroplastischen Werkstoffen, Sheet Moulding Compounds (SMC), verstanden werden, die eine kontinuierliche Produktion von mattenartigen Formmassen mit direkt anschließender Weiterverarbeitung der mattenartigen Formmassen ermöglicht. Bevorzugt ist die Direkt-SMC-Produktionsvorrichtung durch Fördermittel, wie beispielsweise Förderbänder, Industrieroboter usw., mit einer weiterverarbeitenden Produktionsvorrichtung, wie beispielsweise einer Presse usw., verbunden. Eine durch die erfindungsgemäße Direkt-SMC-Produktionsvorrichtung produzierte mattenartige Formmasse, insbesondere eine Harzmatte, kann somit entkoppelt von einer Reifungszwischenlagerung, insbesondere mit einer Reifezeit kleiner als 6 Stunden, direkt weiterverarbeitet werden.

Unter einer "Imprägniervorrichtung" soll hier insbesondere eine Vorrichtung verstanden werden, die dazu vorgesehen ist, Fasern, insbesondere geschnittene Fasern, mit zumindest einem Matrixwerkstoff zu mischen und/oder zu tränken und/oder einen Materialstrang aus Fasern und zumindest einem Matrixwerkstoff zu verdichten. Der Begriff "Materialstrang" soll hier insbesondere eine klebrige, zusammenhängende Formmasse definieren, die Fasern, insbesondere geschnittene Fasern, zumindest ein vernetzungsfähiges Harz und Zusatzstoffe, wie beispielsweise Additive zur Schwundreduktion, Trennmittel, Reaktionsmittel usw., aufweist. Unter einer "Kühlvorrichtung" soll hier insbesondere eine Vorrichtung verstanden werden, die gezielt dazu vorgesehen ist, eine Temperaturdifferenz zwischen zumindest zwei Bereichen und/oder zwischen zumindest zwei Bauteilen zu erzeugen, insbesondere eine Temperaturdifferenz, die größer ist als 20°C und bevorzugt größer als 60°C. Insbesondere ist die Kühlvorrichtung dazu vorgesehen, zumindest ein Bauteil unter eine Raumtemperatur abzukühlen, insbesondere unter 20°C und vorzugsweise unter 10°C. Besonders bevorzugt umfasst die Kühlvorrichtung hierbei eine Kältemaschine. Der Materialstrang wird vorteilhafterweise mittels der Kühlvorrichtung auf eine Temperatur von ungefähr 0°C bis 2°C gekühlt. Mittels der Kühlvorrichtung kann der Materialstrang für eine Weiterverarbeitung vorteilhaft auf eine vorgegebene Temperatur gekühlt werden. Des Weiteren kann durch die Kühlvorrichtung vorteilhaft eine Veränderung einer Viskosität des Materialstrangs hervorgerufen werden.

Ferner wird vorgeschlagen, dass die Kühlvorrichtung zumindest ein Kühlplattenelement aufweist, über das der Materialstrang entlang der Materialtransportrichtung hinweg befördert wird. Unter einem "Kühlplattenelement" soll hier insbesondere ein Element verstanden werden, das plattenförmig ausgebildet ist und durch das ein von einer Kältemaschine der Kühlvorrichtung gekühltes Medium zirkulieren kann. Vorzugsweise ist der Materialstrang, in einer Ebene senkrecht zu einer Materialstrangtransportrichtung betrachtet, von zumindest zwei Kühlplattenelementen umgeben. Eine Wärmeübertragung zwischen dem Materialstrang und dem Kühlplattenelement erfolgt somit vorzugsweise mittels Konvektion. Es kann konstruktiv einfach eine Kühlung des Materialstrangs erreicht werden.

In einer weiteren Ausgestaltung der Erfindung wird vorgeschlagen, dass die Kühlvorrichtung zumindest ein Kühlwalzenelement aufweist, das zumindest teilweise von dem Materialstrang umschlungen ist. Unter einem "Kühlwalzenelement" soll hier insbesondere ein Element verstanden werden, das zylinderförmig ausgebildet ist, zumindest bei einer Bewegung des Materialstrangs entlang der Materialstrangtransportrichtung auf dem Materialstrang abwälzt und durch das ein von einer Kältemaschine der Kühlvorrichtung gekühltes Medium zirkulieren kann. Der Materialstrang umschließt das Kühlwalzenelement insbesondere entlang eines Umschlingungswinkels von mehr als 120°. Bevorzugt sind mehrere Kühlwalzenelemente entlang der Materialstrangtransportrichtung hintereinander angeordnet. Eine Wärmeübertragung von dem Materialstrang auf das Kühlwalzenelement erfolgt somit vorzugsweise mittels Wärmeleitung (Konduktion). Es kann vorteilhaft und konstruktiv einfach eine große Kühloberfläche der Kühlvorrichtung zur Kühlung des Materialstrangs erreicht werden.

Vorzugsweise weist die Imprägniervorrichtung zumindest eine Verdichtungseinheit auf, die zur Verdichtung des Materialstrangs nach einem Auftrag desselben auf zumindest einem Trägermittel vorgesehen ist. Unter einer "Verdichtungseinheit" soll hier insbesondere eine Einheit verstanden werden, die gezielt dazu vorgesehen ist, mittels einer Krafteinwirkung auf den Materialstrang ein Volumen des Materialstrangs zu verkleinern, insbesondere um mehr als 5%, und eine Dichte des Materialstrangs zu erhöhen, insbesondere eine Dichte einer Anordnung von Inhaltsstoffen des Materialstrangs relativ zueinander, im Vergleich zu einem Volumen und einer Dichte vor der Krafteinwirkung auf den Materialstrang. Unter einem "Trägermittel" soll hier insbesondere ein Mittel verstanden werden, das gezielt dazu vorgesehen ist, einzelne Komponenten des Materialstrangs aufzunehmen und/oder ein Fördermittel vor Verunreinigungen und/oder vor einem Ankleben des Materialstrangs zu schützen. Vorzugsweise ist das Trägermittel als Trägerfolie ausgebildet. Es ist jedoch auch denkbar, dass das Trägermittel als Trägerpulver ausgebildet ist, das auf das Fördermittel aufgetragen werden kann. Mittels der erfindungsgemäßen Ausgestaltung der Direkt-SMC-Produktionsvorrichtung kann besonders vorteilhaft eine hohe Verdichtung des Materialstrangs erreicht werden.

In einer bevorzugten Ausgestaltung der Direkt-SMC-Produktionsvorrichtung ist die Verdichtungseinheit von einer Wälzeinheit gebildet. Unter einer "Wälzeinheit" soll hier insbesondere eine Einheit verstanden werden, die zumindest ein sich um zumindest eine Achse bewegendes, insbesondere rotierendes, Bauteil aufweist, das in wenigstens einem Betriebszustand auf einem Materialstrang direkt und/oder indirekt abwälzt und den Materialstrang unter Einwirkung einer Kraft verdichtet, insbesondere unter Einwirkung einer Kraft entlang eines linienartigen Kontaktbereichs zwischen Bauteil und Materialstrang. Es kann konstruktiv einfach eine Verdichtungseinheit erreicht werden.

Des Weiteren wird vorgeschlagen, dass die Wälzeinheit zumindest zwei verstellbare Wälzelemente aufweist, insbesondere zwei zumindest unabhängig voneinander verstellbare Wälzelemente. Unter einem "Wälzelement" soll hier ein Bauteil, insbesondere ein rotationssymmetrisches Bauteil, verstanden werden, das dazu vorgesehen ist, Medieneinschlüsse in einem Materialstrang, insbesondere Lufteinschlüsse, mittels einer Abwälzbewegung aus dem Materialstrang zu entfernen und eine Durchmischung, insbesondere eine Homogenität, des Materialstrangs zu erzeugen. Die Wälzelemente sind vorteilhaft als Walzen ausgebildet und weisen vorzugsweise eine zylindrische Form auf. Unter einer "Walze" soll hier insbesondere ein Bauteil verstanden werden, dessen Längserstreckung entlang einer Rotationsachse, bezogen auf eine Abmessung, zumindest einer Erstreckung eines Durchmessers entspricht, bevorzugt jedoch zumindest eine Längserstreckung aufweist, die doppelt so groß ist, wie eine Erstreckung eines Durchmessers. Es ist jedoch auch denkbar, dass die Wälzelemente eine andere, einem Fachmann als sinnvoll erscheinende Ausbildung aufweisen. Mittels einer verstellbaren Ausgestaltung der Wälzelemente der Wälzeinheit kann eine Krafteinwirkung der einzelnen Wälzelemente auf den Materialstrang vorteilhaft angepasst werden.

Vorzugsweise weist die Imprägniervorrichtung eine Steuer- und/oder Regeleinheit auf, die zumindest dazu vorgesehen ist, die zumindest zwei Wälzelemente der Wälzeinheit in Abhängigkeit zumindest eines Produktionsparameters zu verstellen. Unter einem "Produktionsparameter" soll hier insbesondere ein Parameter verstanden werden, der ein durch die Direkt-SMC-Produktionsvorrichtung erzeugtes Produkt direkt und/oder indirekt beeinflusst, wie beispielsweise eine Aufbringmenge eines Matrixwerkstoffs, eine Temperatur des Materialstrangs usw. Hierdurch kann eine besonders vorteilhafte Anpassung der Wälzelemente an verschiedene Produktionsparameter erfolgen, so dass eine hohe Wiederholgenauigkeit bei einer Produktion mit der erfindungsgemäßen Direkt-SMC-Produktionsvorrichtung erreicht werden kann.

Ferner wird vorgeschlagen, dass zumindest ein Wälzelement der Wälzeinheit eine Führungsausnehmung zur Führung des Materialstrangs und/oder eines Fördermittels aufweist. Unter einer "Führungsausnehmung" soll hier insbesondere eine Ausnehmung verstanden werden, die gezielt dazu vorgesehen ist, den Materialstrang zu führen, insbesondere zumindest im Wesentlichen senkrecht zur Materialstrangtransportrichtung. Bevorzugt ist die Führungsausnehmung an eine Außenkontur des Materialstrangs und/oder des Fördermittels angepasst. Die Führungsausnehmung wird vorzugsweise durch eine Reduzierung eines Durchmessers des als Walze ausgebildeten Wälzelements in einem Führungsbereich des Wälzelements zum Vergleich zu einem Durchmesser eines angrenzenden Bereichs des Wälzelements gebildet. Der Führungsbereich geht rampenförmig in den daran angrenzenden Bereich über, so dass eine Steigung zwischen dem Führungsbereich und dem daran angrenzenden Bereich entsteht. Es ist jedoch auch denkbar, dass der Führungsbereich stufenförmig in den angrenzenden Bereich übergeht. Der Führungsbereich ist dazu vorgesehen, den Materialstrang und/oder das Fördermittel aufzunehmen. Bevorzugt weisen alle Wälzelemente der Wälzeinheit eine Führungsausnehmung auf. Unter einem "Fördermittel" soll hier insbesondere ein Mittel zum Transport zumindest eines Produktionsguts, insbesondere eines Materialstrangs, entlang einer vorgegebenen Produktionsrichtung verstanden werden, wie beispielsweise ein Förderband, Förderwalzen usw. Vorzugsweise ist das Fördermittel als Förderband ausgebildet. Es kann vorteilhaft eine gleichmäßige Ausrichtung des Fördermittels und/oder des Materialstrangs durch die Führungsausnehmung des Wälzelements erreicht werden.

Vorteilhafterweise weist die Verdichtungseinheit eine Haupterstreckungsrichtung auf, die in einem Betriebszustand zumindest im Wesentlichen in vertikaler Richtung verläuft. Es ist jedoch auch denkbar, dass die Verdichtungseinheit eine Haupterstreckung aufweist, die entlang einer anderen, einem Fachmann als sinnvoll erscheinenden Richtung, wie beispielsweise einer horizontalen Richtung, verläuft. In diesem Zusammenhang soll "in einem Betriebszustand" hier insbesondere einen Zustand der erfindungsgemäßen Direkt-SMC-Produktionsvorrichtung definieren, in dem die Direkt-SMC-Produktionsvorrichtung funktionsfähig an einem Betriebsstandort aufgestellt und eingerichtet ist, so dass eine Produktion mit der Direkt-SMC-Produktionsvorrichtung stattfinden kann und/oder ein Zustand, in dem ein Produktionsprozess abläuft. Unter "zumindest im Wesentlichen in vertikaler Richtung" soll hierbei eine Ausrichtung der Haupterstreckungsrichtung der Verdichtungseinheit verstanden werden, die zumindest im Wesentlichen senkrecht zu einem Untergrund des Betriebsstandorts verläuft, auf dem Maschinenfüße der Direkt-SMC-Produktionsvorrichtung in einem Betriebszustand angeordnet sind. Unter dem Begriff "im Wesentlichen senkrecht" soll hier insbesondere eine Ausrichtung einer Richtung relativ zu einer Bezugsrichtung definieren, wobei die Richtung und die Bezugsrichtung einen Winkel von 90° einschließen und der Winkel eine maximale Abweichung von insbesondere kleiner als 8°, vorteilhaft kleiner als 5° und besonders vorteilhaft kleiner als 2° aufweist. Es kann vorteilhaft eine platzsparende Konstruktion der Direkt-SMC-Produktionsvorrichtung realisiert werden.

Des Weiteren wird vorgeschlagen, dass die Direkt-SMC-Produktionsvorrichtung eine Temperatureinstelleinheit umfasst, die zumindest dazu vorgesehen ist, wenigstens ein Fördermittel der Imprägniervorrichtung zu temperieren. Die Temperaturregeleinheit ist vorzugsweise als Heizeinheit ausgebildet, die ein Fördermittel auf eine vorgegebene Temperatur erwärmt und insbesondere eine Temperatur des Fördermittels regelt. Insbesondere erwärmt die Temperatureinstelleinheit das Fördermittel auf eine Temperatur größer als 20°, bevorzugt größer als 30° und besonders bevorzugt größer als 40°. Mittels der Temperatureinstelleinheit kann das Fördermittel vorteilhaft auf eine Temperatur des Materialstrangs erwärmt werden, so dass eine vorteilhafte Weiterverarbeitung des Materialstrangs erfolgen kann.

Vorzugsweise weist die Direkt-SMC-Produktionsvorrichtung zumindest eine erste Faserzuführvorrichtung und eine zweite Faserzuführvorrichtung auf, die dazu vorgesehen sind, zumindest einem Trägermittel geschnittene Fasern zuzuführen. Es können vorteilhaft einem laufenden Produktionsprozess konstruktiv einfach geschnittene Fasern zugeführt werden.

Vorteilhafterweise ist die erste Faserzuführvorrichtung dazu vorgesehen, einem ersten Trägermittel geschnittene Fasern zuzuführen, und vorteilhafterweise ist die zweite Faserzuführvorrichtung dazu vorgesehen, einem zumindest in einem Betriebszustand getrennt von dem ersten Trägermittel ausgebildeten zweiten Trägermittel geschnittene Fasern zuzuführen. Bevorzugt werden das erste Trägermittel und das zweite Trägermittel in der Imprägniervorrichtung, insbesondere in der Verdichtungseinheit, zusammengeführt. Es können vorteilhaft einem ersten Trägermittel und einem zweiten Trägermittel unabhängig voneinander geschnittene Fasern zugeführt werden. Ferner kann hierdurch eine vorteilhafte Verteilung von geschnittenen Fasern innerhalb des Materialstrangs erreicht werden.

Des Weiteren wird vorgeschlagen, dass die Direkt-SMC-Produktionsvorrichtung zumindest eine erste Faserschneidvorrichtung zum Schneiden von zumindest einer Endlosfaser in geschnittene Fasern umfasst, die der ersten Faserzuführvorrichtung zugeordnet ist, und zumindest eine zweite Faserschneidvorrichtung zum Schneiden von zumindest einer Endlosfaser in geschnittene Fasern, die der zweiten Faserzuführvorrichtung zugeordnet ist. Unter einer "Faserschneidvorrichtung" soll hier insbesondere eine Vorrichtung verstanden werden, die wenigstens ein Schneidelement aufweist, das dazu vorgesehen ist, Endlosfasern zu schneiden und/oder zu brechen. Es können vorteilhaft Endlosfasern in geschnittene Fasern überführt werden und direkt einem Produktionsprozess zugeführt werden.

Vorteilhafterweise umfasst die Direkt-SMC-Produktionsvorrichtung zumindest eine Endlosfaserzuführvorrichtung, die dazu vorgesehen ist, zumindest einer Faserschneidvorrichtung mittels eines Fluidstroms Endlosfasern zuzuführen. Unter einer "Endlosfaserzuführvorrichtung" soll hier insbesondere eine Vorrichtung verstanden werden, die zumindest einen Endlosfasereintritt aufweist und zumindest eine Transporteinheit zum Transport der Endlosfaser zur Faserschneidvorrichtung aufweist. Bevorzugt ist die Endlosfaserzuführvorrichtung von einer Druckluftzuführvorrichtung gebildet. Der Faserschneidvorrichtung können konstruktiv einfach Endlosfasern zugeführt werden.

Die Erfindung geht ferner von einem Verfahren zur Herstellung von Harzmatten aus faserverstärktem Kunststoff mittels einer Direkt-SMC-Produktionsvorrichtung aus.

Es wird vorgeschlagen, dass ein Materialstrang von zumindest einer Kühlvorrichtung gekühlt wird, die entlang einer Materialstrangtransportrichtung nach einer Imprägniervorrichtung zur Imprägnierung von Fasern des Materialstrangs angeordnet ist. Es kann vorteilhaft eine konstruktiv einfache Kühlung des Materialstrangs erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Direkt-SMC-Produktionsvorrichtung in einer schematischen Darstellung,

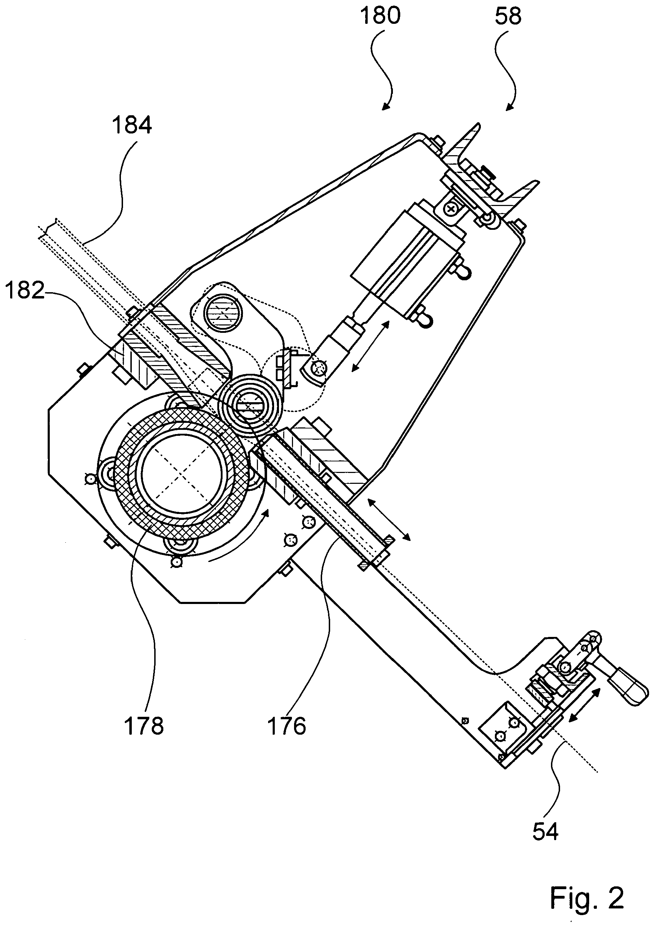

- Fig. 2: eine Detailansicht einer Endlosfaserzuführvorrichtung der erfindungsgemäßen Direkt-SMC-Produktionsvorrichtung in einer schematischen Darstellung,
- Fig. 3: eine Detailansicht eines Wälzelements einer Wälzeinheit der erfindungsgemäßen Direkt-SMC-Produktionsvorrichtung in einer schematischen Darstellung und
- Fig. 4: eine Detailansicht einer Kühlvorrichtung der der erfindungsgemäßen Direkt-SMC-Produktionsvorrichtung in einer schematischen Darstellung.

### Beschreibung des Ausführungsbeispiels

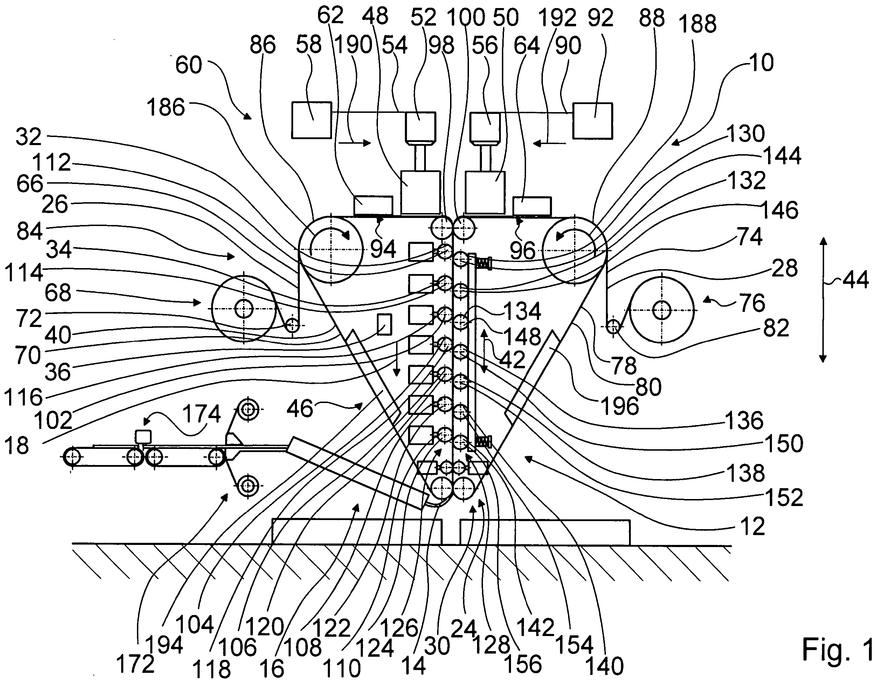

Figur 1 zeigt eine Direkt-SMC-Produktionsvorrichtung 10, die eine Imprägniervorrichtung 12 zur Imprägnierung von Fasern eines Materialstrangs 14 umfasst. Die Fasern sind als geschnittene Fasern ausgebildet. Die Direkt-SMC-Produktionsvorrichtung 10 weist eine Pumpeneinheit (hier nicht dargestellt) auf, die dazu vorgesehen ist, einer Materialauftragungseinheit 60 eine Harzpaste zuzuführen. Die Harzpaste kann hierbei beispielsweise von einem Polyesterharz, von einem Vinylesterharz oder von einem anderen, einem Fachmann als sinnvoll erscheinenden Harz gebildet sein, welches mit Zusatzstoffen gemischt ist. Die Pumpeneinheit umfasst eine Zahnradpumpe (hier nicht dargestellt), die einen konstanten Fluidstrom erzeugt. Es ist jedoch auch denkbar, dass die Pumpeneinheit eine andere, einem Fachmann als sinnvoll erscheinende Pumpe umfasst, wie beispielsweise eine Kolbenpumpe usw.

Die Materialauftragungseinheit 60 umfasst einen ersten Rakelkasten 62 und einen zweiten Rakelkasten 64. Der erste Rakelkasten 62 ist einem ersten Trägermittel 26 zugeordnet. Das erste Trägermittel 26 ist von einer ersten Trägerfolie 66 gebildet, die mittels einer ersten Folienabwicklungsvorrichtung 68 der Direkt-SMC-Produktionsvorrichtung 10 einem als Förderband 70 ausgebildeten Fördermittel 40 der Imprägniervorrichtung 12 zugeführt wird. Die erste Folienabwicklungsvorrichtung 68 umfasst ferner eine Bürstenwalze 72, die dazu vorgesehen ist, die erste Trägerfolie 66 vor einer Aufbringung auf das Förderband 70 zu glätten. Der zweite Rakelkasten 64 ist einem zweiten Trägermittel 28 zugeordnet. Das zweite Trägermittel 28 ist von einer zweiten Trägerfolie 74 gebildet, die mittels einer zweiten Folienabwicklungsvorrichtung 76 der Direkt-SMC-Produktionsvorrichtung 10 einem als weiterem Förderband 78 ausgebildeten Fördermittel 80 der Imprägniervorrichtung 12 zugeführt wird. Die zweite Folienabwicklungsvorrichtung 76 umfasst ebenfalls eine Bürstenwalze 82, die dazu vorgesehen ist, die zweite Trägerfolie 74 vor einer Aufbringung auf das weitere Förderband 78 zu glätten.

Die Imprägniervorrichtung 12 umfasst ferner eine Förderbandantriebseinheit 84, die dazu vorgesehen ist, eine erste Antriebswalze 86 zum Antrieb des Förderbands 70 und eine zweite Antriebswalze 88 zum Antrieb des weiteren Förderbands 78 anzutreiben. Die erste Antriebswalze 86 und die zweite Antriebswalze 88 werden synchron zueinander angetrieben, so dass zwischen dem Förderband 70 und dem weiteren Förderband 78 entlang einer Materialstrangtransportrichtung 18 ein synchroner Lauf erreicht werden kann. Die Antriebswalzen 86, 88 werden in zueinander entgegengesetzte Rotationsrichtungen 186, 188 angetrieben. Ferner weisen die Antriebswalzen 86, 88 ungefähr einen Durchmesser von 250 mm bis 300 mm auf.

Der erste Rakelkasten 62 und der zweite Rakelkasten 64 werden mittels der Pumpeneinheit mit einer Harzpaste (hier nicht dargestellt) gefüllt. Eine optische Sensoreinheit (hier nicht dargestellt) der Materialauftragungseinheit 60 erfasst eine Füllmenge des ersten Rakelkastens 62 und des zweiten Rakelkastens 64. Eine Steuer- und/oder Regeleinheit (hier nicht dargestellt) der Materialauftragungseinheit 60 überwacht eine Füllmenge des ersten Rakelkastens 62 und des zweiten Rakelkastens 64 und regelt somit die Pumpeneinheit. Mittels einer Heizeinheit (hier nicht dargestellt) der Materialauftragungseinheit 60 kann eine Viskosität der Harzpaste eingestellt werden. Ferner umfasst die Materialauftragungsseinheit 60 eine Antriebseinheit (hier nicht dargestellt), die dazu vorgesehen ist, den ersten Rakelkasten 62 und den zweiten Rakelkasten 64 relativ zu den Trägerfolien 66, 74 und/oder dem Förderband 70 und dem weiteren Förderband 78 zu bewegen, so dass ein Spalt zwischen dem ersten Rakelkasten 62 und der ersten Trägerfolie 66 und ein Spalt zwischen dem zweiten Rakelkasten 64 und der zweiten Trägerfolie 74 eingestellt werden kann. Hierdurch wird eine Auftragsmenge an Harzpaste auf die Trägerfolien 66, 74 vorgegeben.

Des Weiteren umfasst die Direkt-SMC-Produktionsvorrichtung 10 eine erste Faserzuführvorrichtung 48 und eine zweite Faserzuführvorrichtung 50, die dazu vorgesehen sind, zumindest einem der als Trägerfolie 66, 74 ausgebildeten Trägermittel 26, 28 geschnittene Fasern zuzuführen. Die erste Faserzuführvorrichtung 48 ist dazu vorgesehen, dem ersten als Trägerfolie 66 ausgebildeten Trägermittel 26 geschnittene Fasern zuzuführen und die zweite Faserzuführvorrichtung 50 ist dazu vorgesehen, dem in einem Betriebszustand getrennt von dem ersten Trägermittel 26 ausgebildeten zweiten als Trägerfolie 74 ausgebildeten Trägermittel 28 geschnittene Fasern zuzuführen. Die erste Faserzuführvorrichtung 48 ist entlang einer Förderrichtung 190 des Förderbands 70 in einem horizontal verlaufenden Teilbereich 94 des Förderbands 70 hinter dem ersten Rakelkasten 62 senkrecht zur Förderrichtung 190 beabstandet zur Trägerfolie 66 angeordnet. Die zweite Faserzuführvorrichtung 50 ist entlang einer Förderrichtung 192 des weiteren Förderbands 78 in einem horizontal verlaufenden Teilbereich 96 des weiteren Förderbands 78 hinter dem zweiten Rakelkasten 64 senkrecht zur Förderrichtung 192 beabstandet zur Trägerfolie 74 angeordnet. Geschnittene Fasern werden mittels der ersten Faserzuführvorrichtung 48 der Harzpaste zugeführt, die bereits durch den ersten Rakelkasten 62 auf der ersten Trägerfolie 66 aufgetragen wurde. Ferner werden geschnittene Fasern mittels der zweiten Faserzuführvorrichtung 50 der Harzpaste zugeführt, die bereits durch den zweiten Rakelkasten 64 auf der zweiten Trägerfolie 74 aufgetragen wurde. Somit ist nach einer Zuführung von geschnittenen Fasern jeweils auf der ersten Trägerfolie 66 und auf der zweiten Trägerfolie 74 ein Materialstrang 14 aus geschnittenen Fasern und Harzpaste angeordnet.

Die Direkt-SMC-Produktionsvorrichtung 10 umfasst ferner eine erste Faserschneidvorrichtung 52 zum Schneiden von zumindest einer Endlosfaser 54 in geschnittene Fasern, die der ersten Faserzuführvorrichtung 48 zugeordnet ist, und zumindest eine zweite Faserschneidvorrichtung 56 zum Schneiden von zumindest einer Endlosfaser 90 in geschnittene Fasern, die der zweiten Faserzuführvorrichtung 50 zugeordnet ist. Die Endlosfasern 54, 90 werden durch Endlosfaserzuführvorrichtungen 58, 92 der Direkt-SMC-Produktionsvorrichtung 10 der ersten Faserschneidvorrichtung 52 und der zweiten Faserschneidvorrichtung 56 mittels eines Fluidstroms zugeführt. Hierbei ist eine der Endlosfaserzuführvorrichtungen 58, 92 der ersten Faserschneidvorrichtung 52 zugeordnet und eine der Endlosfaserzuführvorrichtungen 58, 92 ist der zweiten Faserschneidvorrichtung 56 zugeordnet.

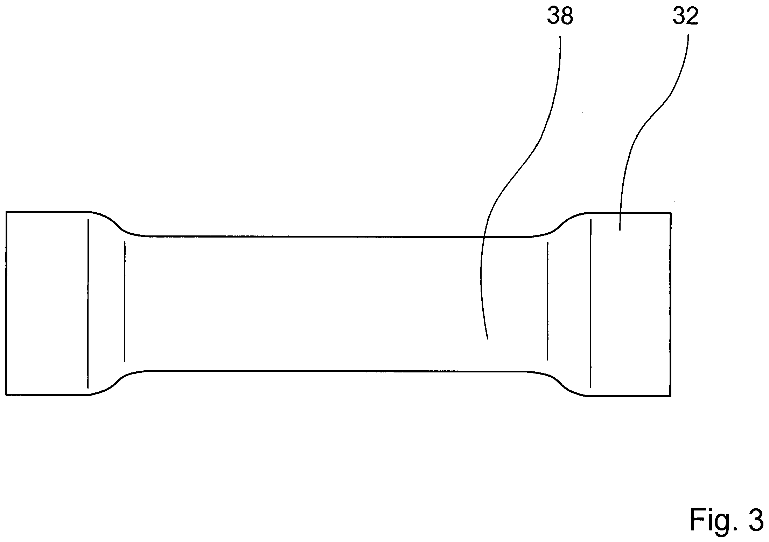

Die Endlosfaserzuführvorrichtung 58, die der ersten Faserschneidvorrichtung 52 zugeordnet ist, ist in Figur 3 detailierter dargestellt. Die Endlosfaserzuführvorrichtung 58 weist ein Einblasrohr 176 auf, mittels dessen die Endlosfaser 54 in die Endlosfaserzuführvorrichtung 58 eingeführt wird. Ferner weist die Endlosfaserzuführvorrichtung 58 eine Fadenvorzugswalze 178 auf, die zusammen mit einer Andrückeinheit 180 der Endlosfaserzuführvorrichtung 58 die Endlosfaser 54 einer Endlosfaseraufnahme 182 zuführt. Die Endlosfaseraufnahme 182 ist mit einem Rohr 184 mit der ersten Faserschneidvorrichtung 52 verbunden. Die Endlosfaser 54 wird mittels Druckluft durch das Rohr 184 zur ersten Faserschneidvorrichtung 52 transportiert. Die Endlosfaserzuführvorrichtung 92, die der zweiten Faserschneidvorrichtung 56 zugeordnet ist, weist einen analogen Aufbau auf, so dass hier auf die oben aufgeführte Beschreibung verwiesen werden kann.

Die erste Faserschneidvorrichtung 52, die erste Faserzuführvorrichtung 48 und der erste Rakelkasten 62 sind in dem horizontal verlaufenden Teilbereich 94 des Förderbands 70 der Imprägniervorrichtung 12 angeordnet. Die zweite Faserschneidvorrichtung 56, die zweite Faserzuführvorrichtung 50 und der zweite Rakelkasten 64 sind in dem ebenfalls horizontal verlaufenden Teilbereich 96 des weiteren Förderbands 78 der Imprägniervorrichtung 12 angeordnet.

Die Direkt-SMC-Produktionsvorrichtung 10 weist ferner eine Temperatureinstelleinheit 46 auf, die dazu vorgesehen ist, wenigstens ein Fördermittel 40, 80 der Imprägniervorrichtung 12 zu temperieren. Die Temperatureinstelleinheit 46 ist dazu vorgesehen, eine Temperatur des Förderbands 70 und eine Temperatur des weiteren Förderbands 78 der Imprägniervorrichtung 12 an eine Temperatur der aufgetragenen Harzpaste anzugleichen. Hierzu umfasst die Temperatureinstelleinheit 46 eine erste Heizeinheit 194, die dem Förderband 70 zugeordnet ist, und eine zweite Heizeinheit 196, die dem weiteren Förderband 78 zugeordnet ist.

Des Weiteren weist die Imprägniervorrichtung 12 eine Verdichtungseinheit 24 auf, die zur Verdichtung des Materialstrangs 14 nach einem Auftrag der Harzpaste und der geschnittenen Fasern des Materialstrangs 14 auf das erste Trägermittel 26 und das zweite Trägermittel 28 vorgesehen ist. Die Verdichtungseinheit 24 weist eine Haupterstreckungsrichtung 42 auf, die in einem Betriebszustand zumindest im Wesentlichen in vertikaler Richtung 44 verläuft. Somit ist die Haupterstreckungsrichtung 42 der Verdichtungseinheit 24 zumindest im Wesentlichen senkrecht zu den horizontal verlaufenden Teilbereichen 94, 96 des Förderbands 70 und des weiteren Förderbands 78 angeordnet. Das Förderband 70 und das weitere Förderband 78 werden im Bereich der Verdichtungseinheit 24 jeweils mittels einer Umlenkwalze 98, 100 der Imprägniervorrichtung 12 in Richtung der Haupterstreckungsrichtung 42 der Verdichtungseinheit 24 umgelenkt. Die Umlenkwalzen 98, 100 weisen einen Durchmesser von ungefähr 120 mm auf. Bei der Umlenkung des Förderbands 70 und des weiteren Förderbands 78 werden die Harzpaste und die geschnittenen Fasern auf der ersten Trägerfolie 66 und die Harzpaste und die geschnittenen Fasern auf der zweiten Trägerfolie 74 zusammengeführt. Somit wird ein gemeinsamer Materialstrang 14 gebildet, der durch die Verdichtungseinheit 24 gefördert wird.

Die Verdichtungseinheit 24 ist von einer Wälzeinheit 30 gebildet. Eine Temperierung der Wälzeinheit 30 mittels der Temperatureinstelleinheit 46 ist ebenfalls denkbar. Die Wälzeinheit 30 weist zumindest zwei verstellbare Wälzelemente 32, 34 auf. Insgesamt weist die Wälzeinheit 30 sieben verstellbare Wälzelemente 32, 34, 102, 104, 106, 108, 110 auf, die relativ zueinander verstellbar sind. Die Wälzelemente 32, 34, 102, 104, 106, 108, 110 sind als Walzen 112, 114, 116, 118, 120, 122, 124 ausgebildet. Die als Walzen 112, 114, 116, 118, 120, 122, 124 ausgebildeten Wälzelemente 32, 34, 102, 104, 106, 108, 110 der Wälzeinheit 30 weisen jeweils eine Führungsausnehmung 38 (Figur 3) zur Führung des Materialstrangs 14 und/oder des als Förderband 70 ausgebildeten Fördermittels 40 auf.

Ferner weist die Imprägniervorrichtung 12 eine Steuer- und/oder Regeleinheit 36 auf, die dazu vorgesehen ist, die als Walzen 112, 114, 116, 118, 120, 122, 124 ausgebildeten Wälzelemente 32, 34, 102, 104, 106, 108, 110 der Wälzeinheit 30 in Abhängigkeit zumindest eines Produktionsparameters zu verstellen. Die Walzen 112, 114, 116, 118, 120, 122, 124 können hierbei durch eine Pneumatikeinheit (hier nicht dargestellt) mittels Druckluft entlang einer Richtung senkrecht zur Haupterstreckungsrichtung 42 der Verdichtungseinheit 24 verstellt werden. Es ist jedoch auch denkbar, dass die Walzen 112, 114, 116, 118, 120, 122, 124 hydraulisch oder elektrisch verstellbar sind. Hierdurch kann ein Druck zur Verdichtung auf den Materialstrang 14 ausgeübt werden.

Die Walzen 112, 114, 116, 118, 120, 122, 124 sind innerhalb der Wälzeinheit 30 entlang der Materialstrangtransportrichtung 18 hintereinander in einer ersten Walzenreihe 126 der Wälzeinheit 30 angeordnet. Die Wälzeinheit 30 weist ferner eine zweite Walzenreihe 128 auf, die zumindest im Wesentlichen parallel zur Materialstrangtransportrichtung 18 und zur ersten Walzenreihe 126 verläuft. Ferner sind die erste Walzenreihe 126 und die zweite Walzenreihe 128 senkrecht zur Materialstrangtransportrichtung 18 beabstandet zueinander angeordnet. Die zweite Walzenreihe 128 weist ebenfalls sieben als Walzen 130, 132, 134, 136, 138, 140, 142 ausgebildete Wälzelemente 144, 146, 148, 150, 152, 154, 156 auf. Die Walzen 130, 132, 134, 136, 138, 140, 142 sind als Einheit federnd gelagert und entlang der Materialstrangtransportrichtung 18 verstellbar ausgebildet. Des Weiteren kann die Einheit aus Walzen 130, 132, 134, 136, 138, 140, 142 der zweiten Walzenreihe 128 senkrecht zur Haupterstreckungsrichtung 42 der Verdichtungseinheit 24 bewegt werden, so dass zur Inbetriebnahme oder zur Fehlerbeseitigung ein einfacher Zugang zu der ersten Walzenreihe 126 und der zweiten Walzenreihe 128 ermöglicht werden kann. Die weisen ebenfalls eine Führungsausnehmung auf, die analog zur Führungsausnehmung 38 der Walzen 112, 114, 116, 118, 120, 122, 124 der ersten Walzenreihe 126 ausgebildet ist, so dass zur Beschreibung einer Ausgestaltung der Führungsausnehmung der Walzen 130, 132, 134, 136, 138, 140, 142 der zweiten Walzenreihe 128 auf Figur 3 verweisen werden kann.

Die Walzen 112, 114, 116, 118, 120, 122, 124 der ersten Walzenreihe 126 weisen in einem Betriebszustand eine zu den Walzen 130, 132, 134, 136, 138, 140, 142 der zweiten Walzenreihe 128 entgegengesetzte Rotationsrichtung auf. Ferner sind die Walzen 112, 114, 116, 118, 120, 122, 124 der ersten Walzenreihe 126 entlang der Materialstrangtransportrichtung 18 relativ zu den Walzen 130, 132, 134, 136, 138, 140, 142 der zweiten Walzenreihe 128 versetzt angeordnet. Rotationsachsen der Walzen 112, 114, 116, 118, 120, 122, 124 der ersten Walzenreihe 126 sind entlang der Materialstrangtransportrichtung 18 ungefähr um eine Erstreckung eines Radius der Walzen 112, 114, 116, 118, 120, 122, 124 relativ zu Rotationsachsen der Walzen 130, 132, 134, 136, 138, 140, 142 der zweiten Walzenreihe 128 versetzt angeordnet. Hierbei weisen die Walzen 112, 114, 116, 118, 120, 122, 124 der ersten Walzenreihe 126 und die Walzen 130, 132, 134, 136, 138, 140, 142 der zweiten Walzenreihe 128 den gleichen Radius auf. Das Förderband 70 und das weitere Förderband 78 der Imprägniervorrichtung 12 und der dazwischen befindliche Materialstrang 14 sowie die erste Trägerfolie 66 und die zweite Trägerfolie 74 werden entlang der Materialstrangtransportrichtung 18 zwischen der ersten Walzenreihe 126 und der zweiten Walzenreihe 128 hindurchgeführt. Hierbei wird der Materialstrang 14 verdichtet und die geschnittenen Fasern des Materialstrangs 14 werden imprägniert.

Ferner weist die Direkt-SMC-Produktionsvorrichtung 10 eine Kühlvorrichtung 16 zur Kühlung des Materialstrangs 14 auf, die entlang der Materialstrangtransportrichtung 18 nach der Imprägniervorrichtung 12 angeordnet ist. Der Materialstrang 14 und die erste Trägerfolie 66 und die zweite Trägerfolie 74 werden nach Verlassen der Wälzeinheit 30 der Kühlvorrichtung 16 zugeführt. Die Kühlvorrichtung 16 umschließt den Materialstrang 14, in einer Ebene senkrecht zur Materialstrangtransportrichtung 18 betrachtet, vollständig.

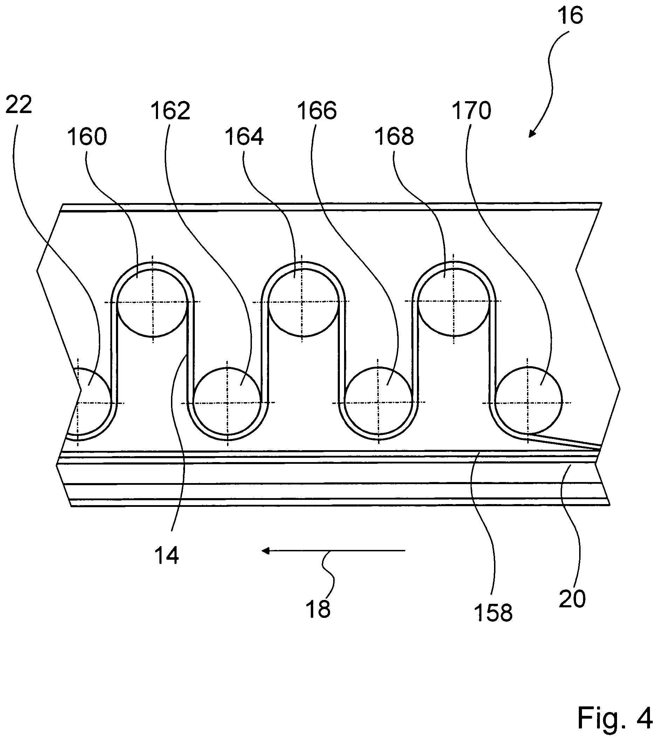

Ferner weist die Kühlvorrichtung 16 ein Kühlplattenelement 20 auf, über das der Materialstrang 14 entlang der Materialstrangtransportrichtung 18 hinweg befördert wird (Figur 4). Das Kühlplattenelement 20 ist unterhalb eines Förderbands 158 angeordnet, das den Materialstrang 14 entlang der Materialstrangtransportrichtung 18 innerhalb der Kühlvorrichtung 16 befördert. Es ist jedoch auch denkbar, dass die Kühlvorrichtung 16 weitere Kühlplattenelemente 20 aufweist, so dass der Materialstrang 14, in einer Ebene senkrecht zur Materialstrangtransportrichtung 18 betrachtet, vollständig von Kühlplattenelementen 20 umgeben ist.

Des Weiteren weist die Kühlvorrichtung 16 zumindest ein Kühlwalzenelement 22 auf, das zumindest teilweise von dem Materialstrang 14 umschlungen ist (Figur 4). Insgesamt weist die Kühlvorrichtung 16 eine Vielzahl an Kühlwalzenelementen 22, 160, 162, 164, 166, 168, 170 auf, von denen in Figur 4 lediglich sieben Kühlwalzenelemente 22, 160, 162, 164, 166, 168, 170 dargestellt sind. Der Materialstrang 14 umschließt die Kühlwalzenelemente 22, 160, 162, 164, 166, 168, die in einem Durchfahrbereich einer Kühlwalzenstrecke der Kühlvorrichtung 16 angeordnet sind, entlang eines Umschlingungswinkels von mehr als 160°. Die Kühlwalzenelemente 170, die in einem Einfahrbereich bzw. einem Ausfahrbereich der Kühlwalzenstrecke angeordnet sind, werden von dem Materialstrang 14 entlang eines Umschlingungswinkels von ungefähr 80° umschlossen. Das Kühlplattenelement 20 ist, in einem Betriebszustand betrachtet, unterhalb der Kühlwalzenelemente 22, 160, 162, 164, 166, 168, 170 angeordnet. Alternativ ist es auch denkbar, dass die Kühlvorrichtung 16 lediglich das Kühlplattenelement 20 oder lediglich die Kühlwalzenelemente 22, 160, 162, 164, 166, 168, 170 zur Kühlung des Materialstrangs 14 aufweist.

In der Kühlvorrichtung 16 wird der Materialstrang 14 mittels des Förderbands 158 innerhalb der Kühlvorrichtung 16 über das Kühlplattenelement 20 hinweg befördert. Anschließend wird der Materialstrang 14 durch die Kühlwalzenelemente 22, 160, 162, 164, 166, 168, 170 befördert. Nachdem der Materialstrang 14 die Kühlwalzenstrecke der Kühlwalzenelemente 22, 160, 162, 164, 166, 168, 170 durchfahren hat, wird der Materialstrang 14 aus der Kühlvorrichtung 16 hinaus befördert. Der Materialstrang 14 wird innerhalb der Kühlvorrichtung 16 auf eine Temperatur von ungefähr 0°C bis 2°C gekühlt.

Nachdem der Materialstrang 14 die Kühlvorrichtung 16 verlassen hat, wird der Materialstrang 14 zusammen mit der ersten Trägerfolie 66 und der zweiten Trägerfolie 74 einer Folienaufwicklungsvorrichtung 172 zugeführt. Die Folienaufwicklungsvorrichtung 172 ist dazu vorgesehen, die erste Trägerfolie 66 und die zweite Trägerfolie 74 von dem Materialstrang 14 zu trennen und die erste Trägerfolie 66 und die zweite Trägerfolie 74 jeweils getrennt voneinander aufzuwickeln. Der Materialstrang 14 wird anschließend einer Schneidvorrichtung 174 zugeführt, die Teile vom Materialstrang 14 abtrennt, die anschließend beispielsweise mittels einer Presse weiterverarbeitet werden.

**Bezugszeichen**

| | | | |
|---|---|---|---|
| 10 | Direkt-SMC-Produktionsvorrichtung | 52 | Faserschneidvorrichtung |
| | | 54 | Endlosfaser |
| 12 | Imprägniervorrichtung | 56 | Faserschneidvorrichtung |
| 14 | Materialstrang | 58 | Endlosfaserzuführvorrichtung |
| 16 | Kühlvorrichtung | | |
| 18 | Materialstrangtransportrichtung | 60 | Materialauftragungseinheit |
| 20 | Kühlplattenelement | 62 | Rakelkasten |
| 22 | Kühlwalzenelement | 64 | Rakelkasten |
| 24 | Verdichtungseinheit | 66 | Trägerfolie |
| 26 | Trägermittel | 68 | Folienabwicklungsvorrichtung |
| 28 | Trägermittel | | |
| 30 | Wälzeinheit | 70 | Förderband |
| 32 | Wälzelement | 72 | Bürstenwalze |
| 34 | Wälzelement | 74 | Trägerfolie |
| 36 | Steuer- und/oder Regeleinheit | 76 | Folienabwicklungsvorrichtung |
| 38 | Führungsausnehmung | 78 | Förderband |
| 40 | Fördermittel | 80 | Fördermittel |
| 42 | Haupterstreckungsrichtung | 82 | Bürstenwalze |
| | | 84 | Förderbandantriebseinheit |
| 44 | vertikaler Richtung | | |
| 46 | Temperatureinstelleinheit | 86 | Antriebswalze |
| | | 88 | Antriebswalze |
| 48 | Faserzuführvorrichtung | 90 | Endlosfaser |
| 50 | Faserzuführvorrichtung | 92 | Endlosfaserzuführvor- |
| | richtung | 148 | Wälzelement |
| 94 | Teilbereich | 150 | Wälzelement |
| 96 | Teilbereich | 152 | Wälzelement |
| 98 | Umlenkwalze | 154 | Wälzelement |
| 100 | Umlenkwalze | 156 | Wälzelement |
| 102 | Wälzelement | 158 | Förderband |
| 104 | Wälzelement | 160 | Kühlwalzenelement |
| 106 | Wälzelement | 162 | Kühlwalzenelement |
| 108 | Wälzelement | 164 | Kühlwalzenelement |
| 110 | Wälzelement | 166 | Kühlwalzenelement |
| 112 | Walze | 168 | Kühlwalzenelement |
| 114 | Walze | 170 | Kühlwalzenelement |
| 116 | Walze | 172 | Folienaufwicklungsvorri |
| 118 | Walze | | chtung |
| 120 | Walze | 174 | Schneidvorrichtung |
| 122 | Walze | 176 | Einblasrohr |
| 124 | Walze | 178 | Fadenvorzugswalze |
| 126 | Walzenreihe | 180 | Andrückeinheit |
| 128 | Walzenreihe | 182 | Endlosfaseraufnahme |
| 130 | Walze | 184 | Rohr |
| 132 | Walze | 186 | Rotationsrichtung |
| 134 | Walze | 188 | Rotationsrichtung |
| 136 | Walze | 190 | Förderrichtung |
| 138 | Walze | 192 | Förderrichtung |
| 140 | Walze | 194 | Heizeinheit |
| 142 | Walze | 196 | Heizeinheit |
| 144 | Wälzelement | | |
| 146 | Wälzelement | | |

## Patentansprüche

1. Direkt-SMC-Produktionsvorrichtung mit einer Imprägniervorrichtung (12) zur Imprägnierung von Fasern eines Materialstrangs (14)und mit einer Kühlvorrichtung (16) zumindest zur Kühlung des Materialstrangs (14), die entlang einer Materialstrangtransportrichtung (18) nach der Imprägniervorrichtung (12) angeordnet ist,
**dadurch gekennzeichnet, dass**
die Imprägniervorrichtung (12) eine Haupterstreckungsrichtung (42) aufweist, die in einem Betriebszustand zumindest im Wesentlichen in vertikaler Richtung (44) verläuft.

2. Direkt-SMC-Produktionsvorrichtung nach Anspruch 1,
**dadurch gekennzeichnet, dass**
die Kühlvorrichtung (16) zumindest ein Kühlplattenelement (20) aufweist, über das der Materialstrang (14) entlang der Materialtransportrichtung (18) hinweg befördert wird.

3. Direkt-SMC-Produktionsvorrichtung zumindest nach Anspruch 1,
**dadurch gekennzeichnet, dass**
die Kühlvorrichtung (16) zumindest ein Kühlwalzenelement (22, 160, 162, 164, 166, 168, 170) aufweist, das zumindest teilweise von dem Materialstrang (14) umschlungen ist.

4. Direkt-SMC-Produktionsvorrichtung nach einem der vorhergehenden Ansprüche,
**dadurch gekennzeichnet, dass**
die Imprägniervorrichtung (12) zumindest eine Verdichtungseinheit (24) aufweist, die zur Verdichtung des Materialstrangs (14) nach einem Auftrag desselben auf zumindest einem Trägermittel (26, 28) vorgesehen ist.

5. Direkt-SMC-Produktionsvorrichtung nach Anspruch 4,
**dadurch gekennzeichnet, dass**
die Verdichtungseinheit (24) von einer Wälzeinheit (30) gebildet ist.

6. Direkt-SMC-Produktionsvorrichtung nach Anspruch 5,
**dadurch gekennzeichnet, dass**
die Wälzeinheit (30) zumindest zwei verstellbare Wälzelemente (32, 34, 102, 104, 106, 108, 110) aufweist.

7. Direkt-SMC-Produktionsvorrichtung zumindest nach Anspruch 5,
**dadurch gekennzeichnet, dass**
die Imprägniervorrichtung (12) eine Steuer- und/oder Regeleinheit (36) aufweist, die zumindest dazu vorgesehen ist, die zumindest zwei Wälzelemente (32, 34, 102, 104, 106, 108, 110) der Wälzeinheit (30) in Abhängigkeit zumindest eines Produktionsparameters zu verstellen.

8. Direkt-SMC-Produktionsvorrichtung zumindest nach Anspruch 5,
**dadurch gekennzeichnet, dass**
zumindest ein Wälzelement (32, 34, 102, 104, 106, 108, 110, 144, 146, 148, 150, 152, 154, 156) der Wälzeinheit (30) eine Führungsausnehmung (38) zur Führung des Materialstrangs (14) und/oder eines Fördermittels (40, 80) aufweist.

9. Direkt-SMC-Produktionsvorrichtung nach einem der vorhergehenden Ansprüche,
**gekennzeichnet durch**
eine Temperatureinstelleinheit (46), die zumindest dazu vorgesehen ist, wenigstens ein Fördermittel (40, 80) der Imprägniervorrichtung (12) zu temperieren.

10. Direkt-SMC-Produktionsvorrichtung nach einem der vorhergehenden Ansprüche,
**gekennzeichnet durch**
zumindest eine erste Faserzuführvorrichtung (48) und eine zweite Faserzuführvorrichtung (50), die dazu vorgesehen sind, zumindest einem Trägermittel (26, 28) geschnittene Fasern zuzuführen.

11. Direkt-SMC-Produktionsvorrichtung zumindest nach Anspruch 9,
**dadurch gekennzeichnet, dass**
die erste Faserzuführvorrichtung (48) dazu vorgesehen ist, einem ersten Trägermittel (26) geschnittene Fasern zuzuführen, und die zweite Faserzuführvorrichtung (50) dazu vorgesehen ist, einem zumindest in einem Betriebszustand getrennt von dem ersten Trägermittel (26) ausgebildeten zweiten Trägermittel (28) geschnittene Fasern zuzuführen.

12. Direkt-SMC-Produktionsvorrichtung nach Anspruch 10 oder 11,
**gekennzeichnet durch**
zumindest eine erste Faserschneidvorrichtung (52) zum Schneiden von zumindest einer Endlosfaser (54) in geschnittene Fasern, die der ersten Faserzuführvorrichtung (48) zugeordnet ist, und zumindest eine zweite Faserschneidvorrichtung (56) zum Schneiden von zumindest einer Endlosfaser (90) in geschnittene Fasern, die der zweiten Faserzuführvorrichtung (50) zugeordnet ist.

13. Direkt-SMC-Produktionsvorrichtung nach einem der vorhergehenden Ansprüche,
**gekennzeichnet durch**
zumindest eine Endlosfaserzuführvorrichtung (58), die dazu vorgesehen ist, zumindest einer Faserschneidvorrichtung (52, 56) mittels eines Fluidstroms Endlosfasern (54, 90) zuzuführen.

14. Verfahren zur Herstellung von Harzmatten aus faserverstärktem Kunststoff, insbesondere mittels einer Direkt-SMC-Produktionsvorrichtung (10) nach einem der vorhergehenden Ansprüche, wobei ein Materialstrang (14) von zumindest einer Kühlvorrichtung (16) gekühlt wird, die entlang einer Materialtransportvorrichtung (18) nach einer Imprägniervorrichtung (12) zur Imprägnierung von Fasern des Materialstrangs (14) angeordnet ist,
**dadurch gekennzeichnet, dass**
der Materialstrang (14) mittels eines Förderbands (158) innerhalb der Kühlvorrichtung (16) über ein Kühlplattenelement (20) hinweg befördert wird und anschließend durch Kühlwalzenelemente (22, 160, 162, 164, 166, 168, 170) befördert wird.

## Claims

1. Direct SMC production apparatus with an impregnation device (12) for impregnating fibres of a material strand (14) and with a cooling device (16) at least for cooling the material strand (14), which is arranged along a material strand transport direction (18), subsequently to the impregnation device (12),
**characterised in that**
the impregnation device (12) has a main extension direction (42) which in an operating state extends at least substantially in a vertical direction (44).

2. Direct SMC production apparatus according to claim 1,
**characterised in that**
the cooling device (16) comprises at least one cooling-plate element (20), across and beyond which the material strand (14) is conveyed along the material transport direction (18).

3. Direct SMC production apparatus at least according to claim 1,
**characterised in that**
the cooling device (16) comprises at least one cooling-roller element (22, 160, 162, 164, 166, 168, 170), which is at least partly enlaced by the material strand (14).

4. Direct SMC production apparatus according to one of the preceding claims,
**characterised in that**
the impregnation device (12) comprises at least one densifying unit (24), which is provided for densification of the material strand (14) after application of said material strand (14) onto at least one carrier element (26, 28).

5. Direct SMC production apparatus according to claim 4,
**characterised in that**
the densifying unit (24) is implemented by a roller unit (30).

6. Direct SMC production apparatus according to claim 5,
**characterised in that**
the roller unit (30) comprises at least two adjustable roller elements (32, 34, 102, 104, 106, 108, 110).

7. Direct SMC production apparatus at least according to claim 5,
**characterised in that**
the impregnation device (12) comprises a control and/or regulation unit (36), which is at least provided to adjust the at least two roller elements (32, 34, 102, 104, 106, 108, 110) of the roller unit (30) depending on at least one production parameter.

8. Direct SMC production apparatus at least according to claim 5,
**characterised in that**
at least one roller element (32, 34, 102, 104, 106, 108, 110, 144, 146, 148, 150, 152, 154, 156) of the roller unit (30) comprises a guiding recess (38) for guiding the material strand (14) and/or guiding a conveying means (40, 80).

9. Direct SMC production apparatus according to one of the preceding claims,
**characterised by**
a temperature adjusting unit (46), which is at least provided for tempering at least one conveying means (40, 80) of the impregnation device (12).

10. Direct SMC production apparatus according to one of the preceding claims,
**characterised by**
at least one first fibre feeding device (48) and a second fibre feeding device (50), which are provided for feeding cut fibres to at least one carrier means (26, 28).

11. Direct SMC production apparatus at least according to claim 9,
**characterised in that**
the first fibre feeding device (48) is provided to feed cut fibres to a first carrier means (26) and the second fibre feeding device (50) is provided to feed cut fibres to a second carrier means (28) which is in at least one operating state implemented separate from the first carrier means (26).

12. Direct SMC production apparatus according to claim 10 or 11,
**characterised by**
at least one first fibre cutting device (52) for cutting at least one endless fibre (54) into cut fibres, which is allocated to the first fibre feeding device (48) and at least one second fibre cutting device (56) for cutting at least one endless fibre (90) into cut fibres, which is allocated to the second fibre feeding device (50).

13. Direct SMC production apparatus according to one of the preceding claims,
**characterised by**
at least one endless-fibre feeding device (58), which is provided for feeding endless fibres (54, 90) to at least one fibre cutting device (52, 56) via a fluid flow.

14. Method for manufacturing resin prepregs from fibre-reinforced plastic, in particular by means of a direct SMC production apparatus (10) according to one of the preceding claims, in which a material strand (14) is cooled by at least one cooling device (16) which is arranged along a material transport direction (18) subsequently to an impregnation device (12) for impregnating fibres of the material strand (14),
**characterised in that**
the material strand (14) is conveyed within the cooling device (16) across a cooling-plate element (20) via a conveyor belt (158) and is then conveyed via cooling-roller elements (22, 160, 162, 164, 166, 168, 170).

## Revendications

1. Appareillage de production SMC directe, avec un dispositif d'imprégnation (12) pour l'imprégnation des fibres d'un faisceau de matériau (14) et avec un dispositif à refroidissement (16) au moins pour refroidir le faisceau de matériau (14), le dispositif à refroidissement étant disposé le long d'une direction à transport de faisceau de matériau (18), après du dispositif d'imprégnation (12),
**caractérisé en ce que**
le dispositif d'imprégnation (12) comporte une direction d'extension principale (42) s'étendant, dans un état opératif, au moins substantiellement dans une direction verticale (44).

2. Appareillage de production SMC directe selon la revendication 1,
**caractérisé en ce que**
le dispositif à refroidissement (16) comprend au moins un élément de plaque refroidissant (20), à travers duquel le faisceau de matériau (14) est convoyé le long de la direction à transport de matériau (18).

3. Appareillage de production SMC directe au moins selon la revendication 1,
**caractérisé en ce que**
le dispositif à refroidissement (16) comprend au moins un élément de rouleau refroidissant (22, 160, 162, 164, 166, 168, 170), lequel est au moins partiellement enlacé par le faisceau de matériau (14).

4. Appareillage de production SMC directe au moins selon l'une quelconque des revendications précédentes,
**caractérisé en ce que**
le dispositif d'imprégnation (12) comprend au moins une unité de densification (24) prévue à densification du faisceau de matériau (14) après d'application de celui sur au moins un moyen porteur (26, 28).

5. Appareillage de production SMC directe selon la revendication 4,
**caractérisé en ce que**
l'unité de densification (24) est implémentée par une unité à rouleau (30).

6. Appareillage de production SMC directe selon la revendication 5,
**caractérisé en ce que**
l'unité à rouleau (30) comprend au moins deux éléments à rouleau (32, 34, 102, 104, 106, 108, 110) ajustables.

7. Appareillage de production SMC directe au moins selon la revendication 5,
**caractérisé en ce que**
le dispositif d'imprégnation (12) comprend une unité de contrôle et/ou régulation (36) prévue au moins à ajuster les au moins deux éléments à rouleau (32, 34, 102, 104, 106, 108, 110) de l'unité à rouleau (30) en dépendance à au moins un paramètre de production.

8. Appareillage de production SMC directe au moins selon la revendication 5,
**caractérisé en ce qu'**
au moins un élément à rouleau (32, 34, 102, 104, 106, 108, 110, 144, 146, 148, 150, 152, 154, 156) de l'unité à rouleau (30) comporte une échancrure guidant (38) pour guider le faisceau de matériau (14) et/ou un moyen convoyeur (40, 80).

9. Appareillage de production SMC directe selon l'une quelconque des revendications précédentes,
**caractérisé par**
une unité à ajustage de température (46), laquelle et au moins prévue à tempérer au moins un moyen convoyeur (40, 80) du dispositif d'imprégnation (12).

10. Appareillage de production SMC directe selon l'une quelconque des revendications précédentes,
**caractérisé par**
au moins un premier dispositif d'alimentation de fibres (48) et un deuxième dispositif d'alimentation de fibres (50), lesquels sont prévus à alimenter des fibres coupées à au moins un moyen porteur (26, 28).

11. Appareillage de production SMC directe au moins selon la revendication 9,
**caractérisé en ce que**
le premier dispositif d'alimentation de fibres (48) est prévu à alimenter des fibres coupées à un premier moyen porteur (26) et le deuxième dispositif d'alimentation de fibres (50) est prévu à alimenter des fibres coupées à un deuxième moyen porteur (28), lequel est implémenté, au moins dans un état opératif, séparément du premier moyen porteur (26).

12. Appareillage de production SMC directe selon la revendication 10 ou 11,
**caractérisé par**
au moins un premier dispositif coupeur de fibres (52) pour couper au moins une fibre sans fin (54) en fibres coupées, lequel est assigné au premier dispositif d'alimentation de fibres (48), et au moins un deuxième dispositif coupeur de fibres (56) pour couper au moins une fibre sans fin (90) en fibres coupées, lequel est assigné au deuxième dispositif d'alimentation de fibres (50).

13. Appareillage de production SMC directe selon l'une quelconque des revendications précédentes,
**caractérisé par**
au moins un premier dispositif d'alimentation de fibres sans fin (58), lequel est prévu à alimenter des fibres sans fin (54, 90) à au moins un dispositif coupeur de fibres (52, 56) par le biais d'un flux de fluide.

14. Procédé pour produire des mâts résinés de plastique renforcé de fibres, notamment par le biais d'un appareillage de production SMC directe (10) selon l'une quelconque des revendications précédentes, dans lequel un faisceau de matériau (14) est refroidi par au moins un dispositif à refroidissement (16) disposé le long d'une direction à transport de matériau (18), après d'un dispositif d'imprégnation (12) pour l'imprégnation de fibres du faisceau de matériau (14)
**caractérisé en ce que**
le faisceau de matériau (14) est convoyé dans le dispositif à refroidissement (16) à travers d'un élément de plaque refroidissant (20) par le biais d'une courroie (158) et est ensuite convoyé par des éléments de rouleau refroidissant (22, 160, 162, 164, 166, 168, 170).
